# EUROPEAN PATENT SPECIFICATION

(11) **EP 3 964 052 B1**
(45) Date of publication and mention of the grant of the patent: **16.04.2025**
(21) Application number: 20194291.9
(22) Date of filing: 03.09.2020
(51) Int. Cl.: A01G 9/14, G01G 17/04, G01G 23/37

(54) **HOLDER AND ASSEMBLY FOR CULTIVATING PLANTS, AND METHOD OF PROVIDING A WEIGHT CHANGE MEASURING CAPABILITY**
HALTER UND ANORDNUNG ZUM KULTIVIEREN VON PFLANZEN UND VERFAHREN ZUR MESSUNG DER GEWICHTSÄNDERUNG
SUPPORT ET ENSEMBLE DE CULTURE DE PLANTES ET PROCÉDÉ DE MESURE DU CHANGEMENT DE POIDS

(43) Date of publication of application: 09.03.2022
(73) Proprietor: Priva Holding B.V., 2678 LC De Lier (NL)
(72) Inventor: Prins, Dirk, 2693 AM 's-Gravenzande (NL)
(74) Representative: V.O.

(56) References cited:
- WO-A1-2019/077575
- NL-C2- 1 034 116
- US-A1- 2018 359 901

## Description

### Field of the invention

The present invention relates to a movable holder for cultivation of plants, wherein the holder is provided with an upper surface having an area of at least 4 m² for supporting thereon a plurality of plants, and wherein at a lower surface the holder is provided with roller devices, each comprising one or more roller elements, which allow the holder to move over rails or tubes. Such holders are typically used in greenhouses where they can move along rails or tubes, and may be picked up from the rails or tubes for further transport. The invention further relates to a method of providing a weight change measuring capability to such a movable holder, and an assembly comprising such a holder.

### Background art

From NL 1034116 a moveable holder for cultivation of plants is known, the holder comprising a rectangular frame with one or more panels forming a support surface for supporting a plurality of plants thereon, each plant growing in a medium, typically earth, from which the plants can obtain at least some of their water requirement. At its longitudinal edges the frame of the known holder is provided with side walls and a number of crossbeams connect to both sidewalls to provide structural rigidity to the frame. Pairs of roller devices, each comprising one or two roller elements, are mounted on two of the crossbeams, allowing the holder to be rolled across a pair of rails or tubes. Generally, such a pairs of rails or tubes extends over tens or even hundreds of meters in a greenhouse.

Cultivation of plants on such a holder typically includes moving the holder over the rails or tubes at least a times a day, and monitoring a rate of water evaporation by the plants. A common way of estimating the amount of water evaporated by the plants is to place a sample of a number of the plants together with their medium on top of a scale, which scale in turn is placed on the support surface of the holder. A change in measured weight of the sample is then extrapolated to provide an indication of the amount of water that is evaporated by the all plants of the plurality of plants. The sample plants and their growth medium are generally held in a pot or the like, so that they can easily be placed on the scale.

A drawback of this known system is that during measuring of the weight of the sample, the sample is at a greater distance to the support surface of the frame than the other plants of the plurality of plants are. The climate conditions for the plants in the sample and the remaining plants of the plurality of plants are therefore likely to be different, e.g. with respect to average air temperature and/or air humidity. It is also possible that water in the growth medium of the sample partially flows out of the sample and to a location away from the scale. Estimates of evaporation of water by the plurality of plants based on change in weight in sample as measured using the known system are therefore likely to be inaccurate.

It is an object of the invention to provide a holder and method for more accurately determining water evaporation by plants supported on the holder.

### Summary of the invention

To this end, the invention according to claim 1 provides a moveable holder for the cultivation of a plurality of plants, the moveable holder comprising: a frame, wherein said frame is provided with a support surface having an area of at least 4 m² for supporting thereon the plurality of plants; said support surface having two oppositely facing edges; the frame further comprising a plurality of crossbeams arranged below the support surface and substantially bridging a distance between the two oppositely facing edges; wherein the holder further comprises:
two or more support beams, each extending between two adjacent crossbeams and parallel to said crossbeams; a number of load cells for measuring a force exerted on the support beams by the frame; wherein each of the support beams is mounted to its two adjacent crossbeams via one or more of said load cells, and wherein on each of the support beams with roller devices are provided for allowing rolling movement of the holder across a pair of rails or tubes; and one or more transmitters connected to the load cells and adapted for wirelessly transmitting a message containing data on the force exerted on the support beams by the frame as measured by the load cells. The one or more transmitters are connected to the one or more load cells via, circuitry that is adapted for converting signals from the load cells into a message containing data on the force exerted on the support beams by the frame as measured by the load cells.

Each of the support beams is thus connected to the frame via one or more the load cells, and the support surface is completely supported on the support beams via the load cells, so that change in weight carried by the frame can be detected by the load cells. The roller devices on the two support beams allow the holder to be supported in a stable manner on a pair of rails or tubes below the support surface of the holder. At least two roller devices are mounted to each support beam, and each support beam spans a length between the two roller devices mounted thereon along the longitudinal direction of the support beam, and when one of the roller devices hits a slight bump or dimple in a tube or rail, the force thereof will be distributed over the entire support beam. Preferably, the axes of rotation of the roller elements of the roller devices on a same single support beam are substantially fixed with respect to each other.

In case only one transmitter is provided, it is connected to all of the load cells. In case two or more transmitters are provided, preferably each transmitter is connected to the load cells of one of the support beams and adapted for transmitting a message containing data on the force exerted on that support beam by the frame as measured by the corresponding load cells.

Generally, the support surface will be fixed with respect to the crossbeams, e.g. with the lower side of the support surface fixed to upper sides of the crossbeams, for instance by welded these together. The support beams typically are shorter than their adjacent crossbeams.

In an embodiment, the support beams are spaced apart from the frame and from the support surface. This allows slight movement between the support beams and the frame, and in turn allows slight compression of the load cells so that these can be used to measure a force that is exerted by the frame and any plants thereon, on the support beams.

In an embodiment the frame comprises sidewalls at the oppositely facing edges, and the crossbeams connect to both said side walls. The sidewalls provide structural rigidity to the holder and may also help preventing plants from falling off the upper side of the support surface.

In an embodiment, one or more reinforcement structures are provided between cross-beams of each pair of cross-beams that are adjacent to a same support beam, preferably wherein the one or more reinforcement structures spans between said pair of cross-beams on a side of the support beams opposite to the support surface of the holder. The reinforcement structures, which are spaced apart from the support beams, help prevent deformation of the cross-beams. When seen in projection onto the support surface and along the support beam, each reinforcement structure is arranged between the load cells which connect the corresponding support beam to the frame.

Preferably, at least two spaced apart reinforcement structures are connected to the pair of cross-beams, wherein more preferably the distance between the two reinforcement structures is less than a distance between the roller devices that are mounted on the corresponding support beam.

Each reinforcement structure may partially overlap a load cell when seen in top view. In this way, the reinforcement structures are arranged close to the locations where the support beams can exert a horizontally directed force on their adjacent crossbeams.

In an embodiment the support surface is a substantially closed surface. In this embodiment, if the sidewalls project upward from the support surface, the sidewalls and support surface form an open ended container. In an alternative embodiment the support surface is provided with plurality of through openings for allowing air and/or liquid to pass through. This embodiment is suitable for instance when the plants that are to be placed on the support surface are held in pots or other kinds of containers.

In an embodiment the support beams each have a length of at least 90% of the maximum length of its two adjacent crossbeams. Generally, the length of each support beam will be less than the minimum length of its two adjacent cross beams, so that, in case the holder is provided with sidewalls to which the cross beams are connected, the support beams remain spaced apart from the sidewalls.

In an embodiment the support beams each have a lower surface that is substantially flush with the lower surface of one or more crossbeams that are not adjacent to the support beams. The support beams thus do not stand preferably wherein the crossbeams that are adjacent to the support beams each have a lower surface that is arranged vertically above the lower surface of the adjacent support beam, when in use.

In an embodiment, wherein the roller devices are each provided with one or more rollers adapted for rolling contact with a rail or tube of the pair of rails or tubes, wherein when the holder is in an orientation of use in which the support surface extends horizontally, no part of the holder projects further away from the support surface at the lower side of the holder than rollers.

In an embodiment the support surface and/or the holder, when seen in top view, has a substantially rectangular outline. A series of such rectangular holders can be moved over a pair of rails or tubes, in a manner in which the horizontal space for plants on the holders is nearly optimal.

In an embodiment the signal indicative of the force exerted on the support beams by the frame is indicative of a sum of signals provided by the load cells.

The invention provides an assembly for the cultivation of plants, the assembly comprising one or more holders according to any one of the preceding claims, and two parallel tubes or rails in contact with rollers of the roller devices of said one or more holders. The tubes or rails may for instance be mounted on uprights that are supported or the floor, or may be mounted directly on the floor. Preferably the assembly comprises a plurality of holders according to the invention, and a greater number of other holders that are adapted for rolling over the tubes or rails but which are not provided with load cells. Any change in weight derived from the messages transmitted by the holders of the invention will typically also be indicative of a change in weight of the other holders that are not equipped with load cells.

In an embodiment the assembly further comprises: a receiver adapted for receiving from a holder of the one or more holders, a message containing current data on the force exerted on the support beams by the frame of said holder as measured by the load cells thereof; a memory; and a processor connected to the memory and in communication with the receiver, configured for storing in the memory an array of at least six historical data elements derived from messages received earlier from the same holder, wherein the processor is further configured to:
- determine whether the current data differs by more than a predetermined degree from the historical data elements, and if not, updating the historical data elements based on the current data, and otherwise not updating the historical data elements; and
- outputting signals representative of the historical data elements to a display.

Preferably at least 8 or 10 historical data elements are stored in the memory.

Each of the holders is adapted for transmitting one or more messages, e.g. periodically once every 10 minutes or less, which contain with data on the force exerted on load cells of that holder. A holder may for example transmit separate messages with data indicative of the load exerted on one, a pair, or all of its load cells. Typically, a pair of load cells is connected to a single support beam, in which case the sum force of each pair of load cells is transmitted in the one or more messages.

This allows the total force exerted on the load cells of a holder to be estimated By collecting data on this force over time, a change in force over time can be determined, from which a trend in the evaporation of water by the plants can be derived while the plants remain held on the holder, for example for hours or days or even weeks. A holde periodically transmits one or more messages regarding the force exerted on its load cells by the frame e.g. once every 10 minutes or less, for instance once every 5 minutes, over a time period of at least 48 hours, for instance for a time period of 168 hours or more.

The assembly thus allows evaporation of water by the plants to be easily and accurately monitored. Preferably the receiver, memory, processor and display are integrated in trend monitoring device.

In an embodiment the historical data elements are stored in the memory in a queue, and updating the historical data elements based on the current data comprises discarding an oldest of the data elements from the queue and storing a new element that is based on the current data in the queue as a newest historical data element. In this manner a moving window average of historical data elements can be determined. The queue is preferably a fixed size queue, e.g. a circular queue, adapted for storing at least 6, preferably at least 9 historical data elements.

In an embodiment the historical data elements comprise differences over time between measurements indicative of the total force measured by the load cells, and wherein the processor is configured for determining a difference value between the current data and the data from a most recent previously received message which contained data based upon which the historical data elements were updated, and wherein the current data differs by more than a predetermined degree from the historical data elements if the difference value differs by more than a predetermined percentage from an average value of the historical data elements, preferably wherein said predetermined percentage is 8% or greater. For instance, if the one or more current received messages indicate that a total force of about 1700 N is exerted on load cells, and a immediately preceding received message indicated a total force of about 1695 was exerted earlier on the load cells, then the difference is 5 N. If this difference deviates by no more than 8 % from the average of the historical data elements stored in the memory, then the historical data elements are updated to include this difference of 5 N, which will likely change the average of the historical data elements. If the difference deviates by more than 8%, e.g. due to a change in measured force on the load cells when the holder bumps into another holder or the like, then the historical data elements are not updated, and the average value of the historical data elements will remain the same.

In an embodiment said updating the historical data with the current data comprises discarding the oldest historical data and including a difference between the current data and a data on the local force exerted on the support beams by the frame of said holder as measured by the load cells thereof from directly previously received measurement.

In an embodiment the assembly further comprises an evaporation trend logging system comprising: a receiver adapted for receiving from a holder of the one or more holders, a message containing current data on the force exerted on the support beams by the frame of said holder as measured by the load cells thereof; a memory for storing said current data together with earlier data on the force exerted on the support beams by the frame of the same holder that was contained in messages that were received earlier from said holder; a processor adapted for determining from the current data and the earlier data, a trend of change in measured force exerted on the support beams by the frame of the holder over time; and a display adapted for displaying said trend.

By displaying the trend of change in the measured force as measured by the load cells of the holder, also a trend in evaporation of water by the plants on the holder is provided. Instead of, or in addition to, displaying the trend, the trend can be used to control climate in a greenhouse in which the holder is located, and in particular may be used to control supply of water to plants on said holder, e.g. by activating an irrigation system of the greenhouse.

The present invention provides a method of providing a weight change measuring capability to a moveable holder for the cultivation of a plurality of plants, wherein the moveable holder comprises a frame, wherein said frame comprises a support surface having an area of at least 4 m² for supporting thereon the plurality of plants, said support surface having two oppositely facing edges; the frame comprising a plurality of crossbeams arranged below the support surface and substantially bridging a distance between the two oppositely facing edges, wherein on a first and a second of the crossbeams roller devices are provided for allowing rolling movement of the holder across a pair of rails or tubes; the method comprising:
removing the first and second of the crossbeams from the frame;
mounting, on either side of the position where the first crossbeam was mounted, two further crossbeams and mounting a first support beam, via one or more load cells, on the two further crossbeams;
mounting, on either side of adjacent to the position where the second crossbeam was mounted, two further crossbeams and mounting a second support beam, via one or more load cells, on the two further crossbeams;
mounting, on the holder, a transmitter adapted for transmitting a message indicative of the force exerted on the support beams by the frame, and connecting the transmitter to the load cells;
wherein the first and second support beams are each provided with roller devices for allowing rolling movement of the holder across a pair of rails or tubes.

The method of the invention provides an easy manner of retrofitting a prior art holder to a holder capable of measuring a change in weight of plants supported thereby. The method in particular allows a conventional holder to be converted to a holder according to the the invention. Generally, a battery for powering the load cells and the transmitter is also mounted on the frame and connected for powering the load cells and the transmitter.

In an embodiment the first and second support beams are attached to their adjacent further crossbeams in such a manner that the vertical distance between the roller devices and the support surface when the first and second cross bars were mounted to the frame, is substantially equal to the distance between the roller devices and the support surface when the first and support beams are attached to their adjacent further crossbeams. In this manner, a plurality of prior art holders can be used in a greenhouse together with such holders that have been converted according to the method, with the upper sides of the support surfaces of all of these holders (i.e. both the converted and non-converted holders), at substantially a same height.

### Brief description of drawings

The present invention will be discussed in more detail below, with reference to the attached drawings, in which
Fig. 1 shows an isometric bottom side view of a prior art moveable holder for cultivating plants;
Fig. 2 shows an isometric bottom side view of a moveable holder according to the invention;
Figs. 3A and 3B respectively show a detailed isometric view and a front side view of support beam 301 of Fig. 2, with load cells and roller devices attached thereto;
Figs. 4A and 4B respectively show a detailed isometric view and a front side view of support beam 401 of Fig. 2, with load cells and roller devices attached thereto;
Fig. 5A and 5B schematically show a top view and a side view of an assembly according to the invention, with holders of the invention arranged on a pair of tubes;
Fig. 6 shows a flowchart of steps carried out by a processor which may be part of the ass, for filtering out outlier values of the data received from the moveable holders; and
Figs. 7A, 7B and 7C, illustrate steps of converting the prior art holder of Fig. 1 to a holder of the invention of Fig. 2; and
Figs. 8A and 8B illustrate optional reinforcement structures, as may be used in the holder of the invention.

### Description of embodiments

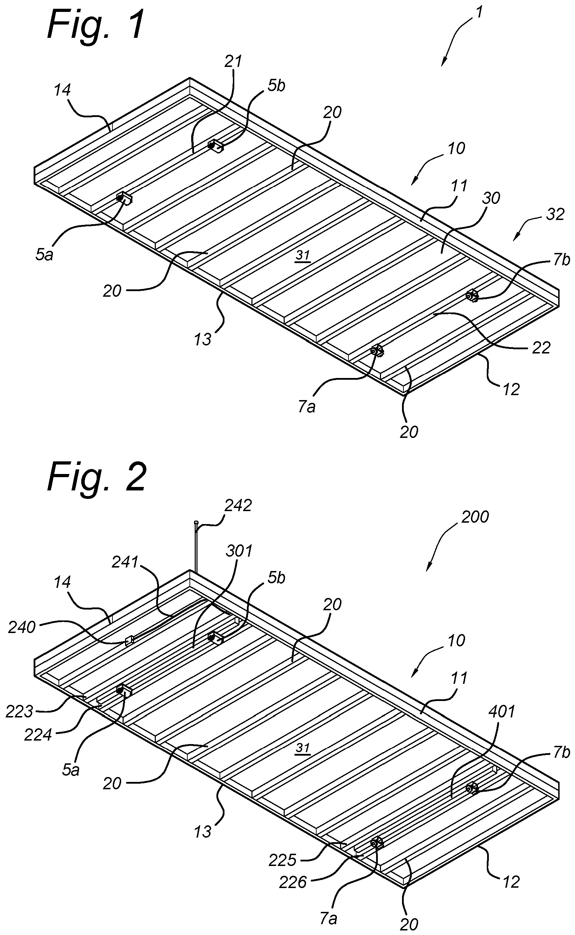

Fig. 1 shows an isometric bottom side view of a prior art moveable holder 1 for a plurality of plants. The moveable holder comprises a frame 10 which comprises a number of sidewalls 11,12,13,14 arranged to form a rectangle. The frame further comprises a plurality of crossbeams 20, 21, 22 which connect between the longitudinal sides of the sidewalls and provide structural strength to the holder. A substantially planar support surface for supporting thereon a plurality of plants is mounted on the crossbeams 20,21,22, in such a manner that during use, a first side 31 of the support surface faces downward and an opposite second side 32 of the support surface faces upwards. The sidewalls 11,13 have a length of about 6 m, and the sidewalls 12,14 have a length of about 2 m. The support surface 30 covers substantially the entire surface area on the inner side of the sidewalls, i.e. when seen in top view the support surface has an area slightly less than 12 m².

Two of the crossbeams, 21 and 22, are each provided with a pair of roller devices 5a,5b, 7a,7b provided with which allow the moveable holder 1 to be rolled across a pair of tracks or tubes that are in contact with the roller devices. During normal use, in which the roller devices are arranged on rails or tubes, the roller elements of the roller devices typically form the lowest portions of the holder 1.

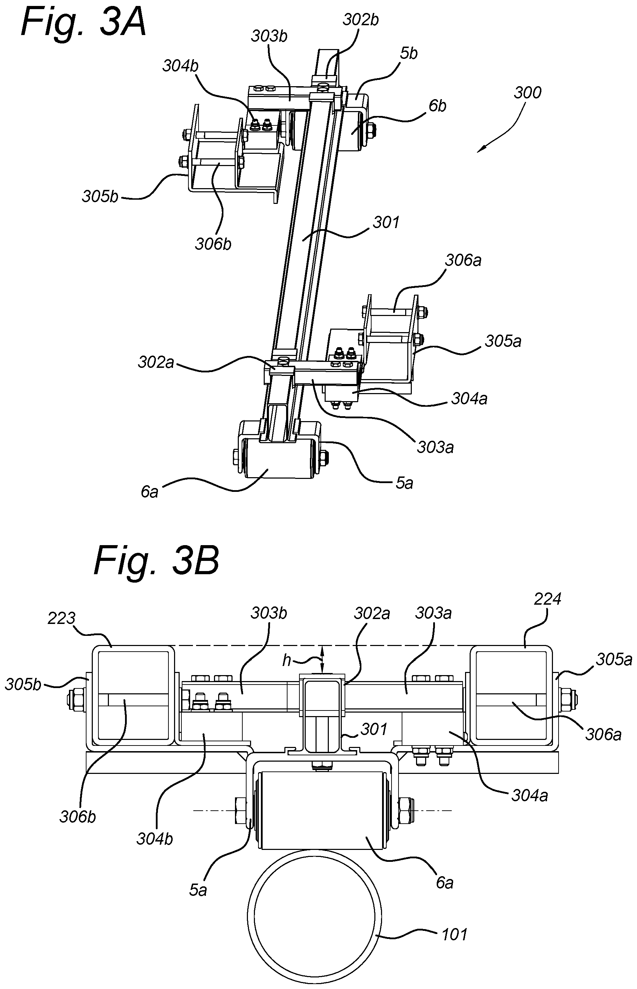

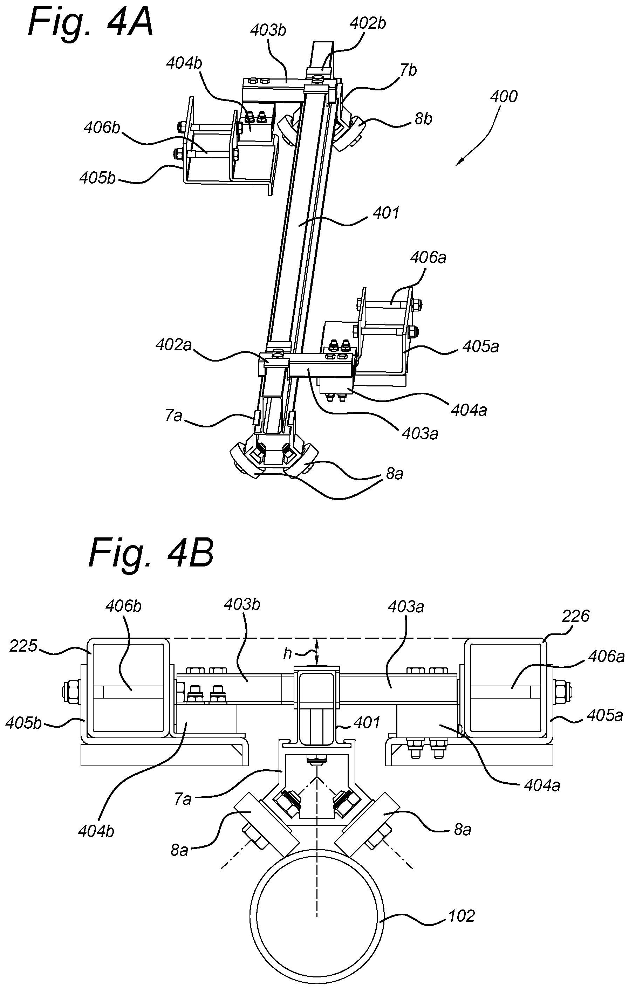

Fig. 2 shows an isometric bottom side view of a holder 200 according to the present invention. The holder 200 comprises a frame 10 comprising sidewalls 11, 12,13,14 and crossbeams 20. However, instead of being mounted on crossbeams, pairs of roller devices 5a,5b and 7a,7b are provided on support beams 301, 401, which support beams in turn are mounted on directly adjacent crossbeams 223,224 and 225,226 via load cells. The support beams are spaced apart from the sidewalls and from the support surface. The load cells are shown in Figs. 3A,3B and 4A,4B which also show in greater detail how the support beams are connected to the frame. As the support surface is connected to the roller devices 5a,5b, 7a,7b via the load cells, the load cells can be used to provide measure of a change in weight that is supported on the support surface, and thus also can provide an indication of the amount of water evaporated by the plants. For powering the load cells, a module 240 is provided. The module 240 comprises a battery, which is connected via leads 241 to the load cells, and comprises circuitry for converting the signals from the load cells to a message suitable for transmission. The module 240 is also connected via leads to a transmitter 242, which is adapted for wirelessly transmitting a message containing data on the force exerted on the support beams by the frame as measured by the load cells.

Figs. 3A and 3B respectively show an isometric view of the support beam 301, and a front view thereof, together with attachment brackets for mounting the support beam 301 on crossbeams 223,224 of Fig. 2. The entire support beam assembly of Fig. 3A is referred to using reference numeral 300.

The support beam 301 of Fig. 3A is shorter than the crossbeams 223,224 so that the distal ends of the support beam remains spaced apart from the sidewalls of the frame. Each of the roller devices 5a,5b is provided with a respective cylindrical roller elements 6a,6b, which can roll over an upper surface of a tube, shown in Fig. 3B. The roller elements 6a,6b have axes of rotation that are substantially parallel the support surface and to each other, and which are fixed with respect to each other and the support beam 301. The beam is provided with reinforced seats 302a,302b which are welded to the beam, and in which respective transverse arms 303a,303b, which extend transversely on either side of the beam, are fixed using bolts. Each arm 303a,303b is fixed, by means of a bolt connection, to an associated respective load cell 304a,304b. Each load cell in turn is fixed to an associated mounting bracket 305a, 305b, for attaching to adjacent crossbeams 223 and 224 respectively, again using bolts 306a,306b.

Though the crossbeams 223, 224 are not shown in Fig. 3A, they are shown in the front view of Fig. 3B, which also shows a tube 101 with which the cylindrical roller elements 6a,6b are in rolling contact. As can be seen, the upper surfaces of the crossbeams 223,224 are spaced apart by a distance h from an upper surface of the support beam 301, so that the support beam will not directly contact the support surface of the frame, and any weight borne by the support beam is carried via the load cells 304a,304b.

Figs. 4A and 4B respectively show a similar isometric view and front view of the support beam 401. The beam 401, reinforced seats 402a,403b, transverse arms 403am,403b, load cells 404a,404b, mounting brackets 405a,405b and bolts 406a,406b are of same construction as beam 301, reinforced seats 302a, 303b, transverse arms 303am,303b, load cells 304a,304b, mounting brackets 305a,305b and bolts 306,306b of Figs. 3A and 3B. The beam support assembly 400 differs from beam support assembly 300 in that different roller devices are provides. In Fig. 4A and 4B roller devices 7a,7b each comprise two wheels 8a, the wheels of each roller device having axes of rotation that are at an angle of about 90 degrees to each other. The two wheels 8a of each roller 7a,7b device can thus rest on a tube 102, shown in Fig. 4B, and help to keep the holder aligned with respect to tube 102, whereas the cylindrical rollers of Fig. 3A,3B contribute to supporting the weight of the holder, but do not contribute to aligning the holder with respect to tube 101.

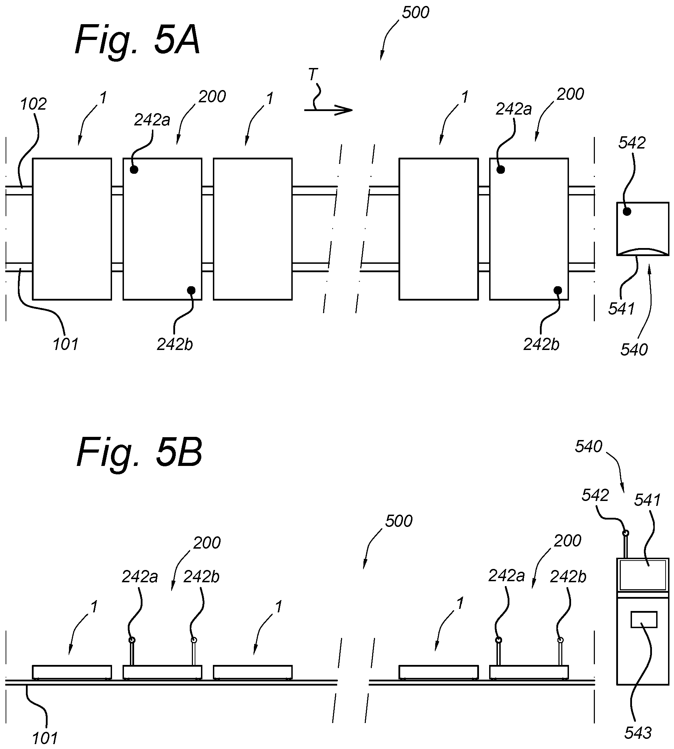

Fig. 5A and 5B schematically show a top view and a side view of an assembly 500 of the invention. Fig. 5A shows that the assembly comprises parallel tubes 101, 102 on which two holders 200 according to the invention are arranged. Additionally, a greater number of prior art holders 1 is arranged on the tubes 101,102, the prior art holders having substantially the same height and width dimensions as the holders 200. As can be seen from Fig. 5B, the top surfaces of the holders 1 and 200 are substantially at a same level, so that measurements of change in weight supported by the holders 200 are likely to be representative of evaporation of water by the plants on all holders 1, 200, assuming these holders are all loaded with a similar number of plants under similar conditions.

The holders 1, 200 are moveable across the tubes 101,102 along a transport direction T, during which the holders are likely to bump in to each other and be subjected to other kinds of impact that may influence the signal measured by the load cells of holders 200. Each of the holders 200 according to the invention wirelessly transmits messages with weight measurements as measured using its load cells, via transmitters 242a, 242b to a wireless receiver 542 that is connected to an evaporation trend logging device 500, e.g. a computer. The transmitter 242a of each holder 200 is connected to the load cells 304a,304b and transmits messages with data on the force exerted thereon by the frame, and transmitter 242b of each holder is connected to the load cells 404a,404b and transmits messages with data on the force exerted thereon by the frame.

Typically, each holder 200 transmits one or more such messages at least once every 5 minutes to the receiver 542, and the messages include a unique identifier for the holder. Thus, a trend logging device 540, which is connected to the receiver and comprises a memory 541 and a processor 543 can keep track of the holder from which a message has been received. The trend logging device 540 is further equipped with display 544, though this display is optional.

The processor 543 is configured to carry out method steps for filtering out that data that has been received from a holder 200 which deviates from more than a predetermined amount from a trend of change in weight over time for the same holder. Plants generally evaporate water in a gradual manner, so that sudden changes in measured weight, especially sudden increases in measured weight, are more likely to be due to impact on the holders 200, than due to sudden evaporation by the plants on the holders 200. By filtering out such sudden measured changes in weight, a more reliable estimate of the evaporation by the plants on each individual holder 200 of the invention can be obtained.

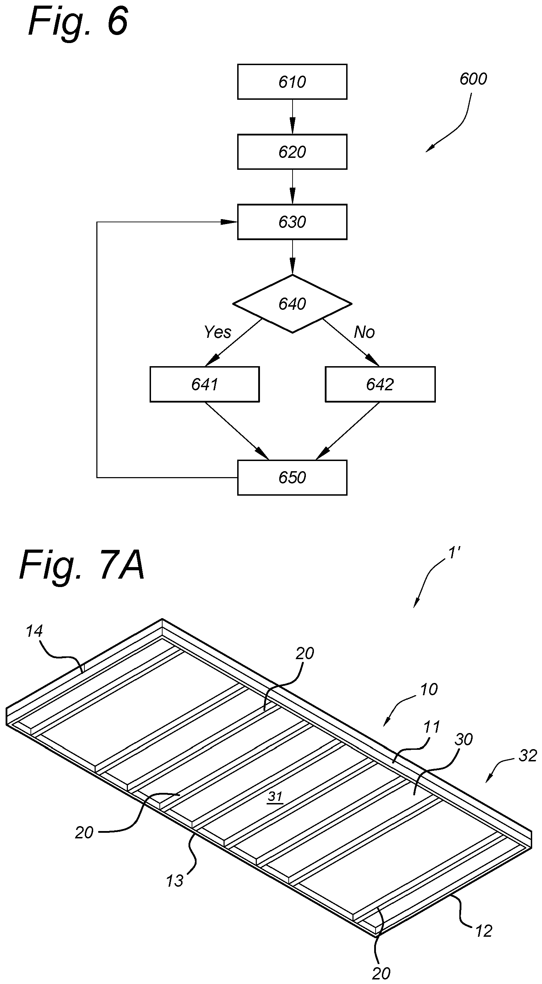

Figs. 6A - 6C illustrate steps of converting a prior art holder 1 as shown in Fig. 1 to a holder 200 according to the present invention. Starting from the holder 1 of Fig. 1, first the crossbeams 21 and 22 which carry roller devices 5a,5b and 7a,7b, are removed from the frame, resulting in the holder 1' shown in Fig. 6A. Next, at locations adjacent to where the crossbeams 21 and 22 were mounted, pairs of crossbeams 223, 224 and 225,226 are mounted to the frame in such a manner that the width between the crossbeams of each pair 223,224 and 225,226 of crossbeams is greater than the respective widths of the crossbeams 21,22 that were removed. This results in the holder 1" shown in Fig. 6B. The distance between crossbeams 223 and 244 may for instance be between 1,5 times and 4 times the width of the support beam of the crossbeam 21 that was removed..

Next, a module 240, which comprises a battery and circuitry for converting the signals from the cells to a message suitable for transmission, is attached to the frame, and a transmitter 242 is mounted on top of the holder. The circuitry is connected to the transmitter 242, so that messages of signals that are received from load cells via leads 241 can be transmitted. This results in the holder 1" shown in Fig. 6C.

As a final step, between each pair 223,224 and 225,226 of crossbeams, a support beam is mounted, via one or more load cells, to the two crossbeams of the pair, and the load cells are connected to the circuitry of module 240 The support beams may comprise crossbeams 21 and 22 that were previously removed and have been shortened on both sides to ensure each support beam remains spaced apart from sidewalls 11 and 13 of the frame. This results in the holder 200 of the invention as shown in Fig. 2.

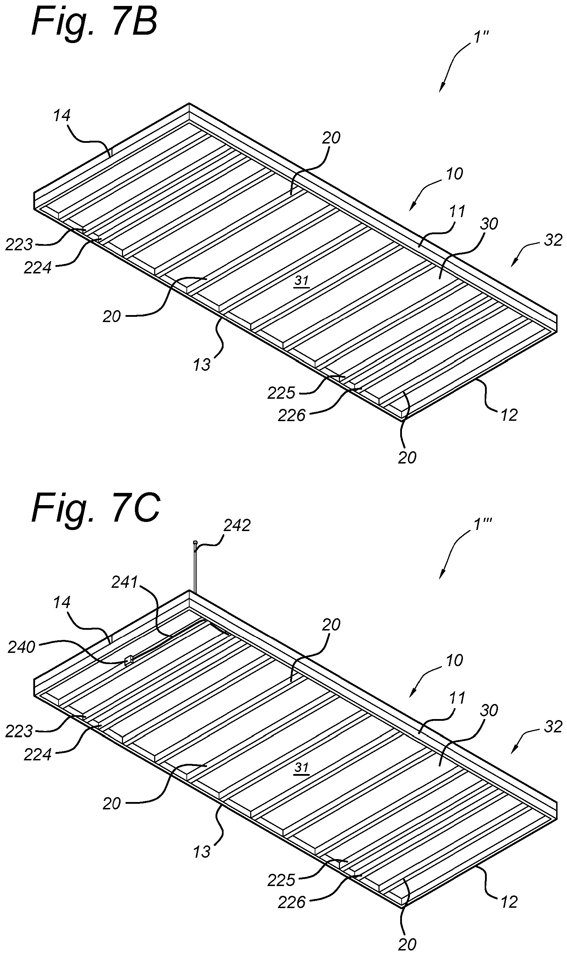

Fig. 7 shows a flowchart of a method 700 for filtering out such measured sudden changes in measured force, or weight, exerted by the frame on the load cells, as may be executed by processor 543 of the embodiment of Fig. 5. In step 710 the device receives, from one of the holders 200, one or more messages with data indicative of force exerted on the load cells of the holder, as well as data identifying the holder which transmitted the message(s), and stores the indication in the memory. The data indicative of force exerted on the load cells may simply correspond to an addition of the measured signals of all load cells of the holder. For instance, the message received may indicate that the load cells of one of the holders 200 shown in Fig. 5A, together measure a weight of 1700 N, which corresponds to a mass of 170 kg.

In step 720, a current difference is calculated between the received data indicative of the force, and same data in most recently received previously stored data in the memory 541, wherein the previously stored data is associated with the same holder and is indicative of the force exerted on the same holder at an earlier point in time. For instance, a directly previously received message for the same holder received earlier may have indicated a load of about 1699,5 N (or a mass of 169,95 kg) on the load cells. In that case, the calculated difference is 0,5 N, which corresponds to a change in mass of 0,05 kg.

The memory also contains a queue with data of a plurality of earlier differences calculated by the processor for data received from the same holder. In the present example, the memory stores 9 such differences that are based on earlier measurements which were not filtered out. Assuming that the holder transmits a message once every 5 minutes, and if no data is filtered out, the memory queue thus olds historical data elements on the change in weight over the last 45 minutes.

In step 730 the current difference is compared with an average of the 9 historical data elements that were calculated based on data received earlier from the same holder. In step 740 it is checked whether the current difference deviates more by than a predetermined degree from this average. In the present example this predetermined degree is 10%, i.e. if the average of the historical differences is 0,5 N, and the newly received data indicates a difference in the measured force that would correspond to 0,54 N (i.e. a change in mass of 0,054 kg), then the newly received data would fall within the expected trend. In such a case, in step 741 the current difference is used to update the historical elements, remaining historical elements in the queue are all moved back one element and the current difference data is stored in the memory at the head of the queue.

Otherwise, if in step 740 it is determined that the current difference does deviate by more than the predetermined margin from the average, step 742 is followed in which the current difference is not used to update the historical data, in this manner effectively ensuring that the values of the historical data are less likely to suddenly change significantly due to events that are not related to the evaporation of water by the plants held on the holder 200.

In step 750 the currently received data is stored in the memory so that it may be used to calculate difference data when a next message with data regarding the force exerted on the load cells of the same holder is received. Thus, when the queue of historical data elements stored in the memory has at least 6 elements, a single measurement which deviates significantly from the average will not affect the average. However, two subsequent measurements which are close to each other but nonetheless deviate significantly from the average will result in the average being updated.

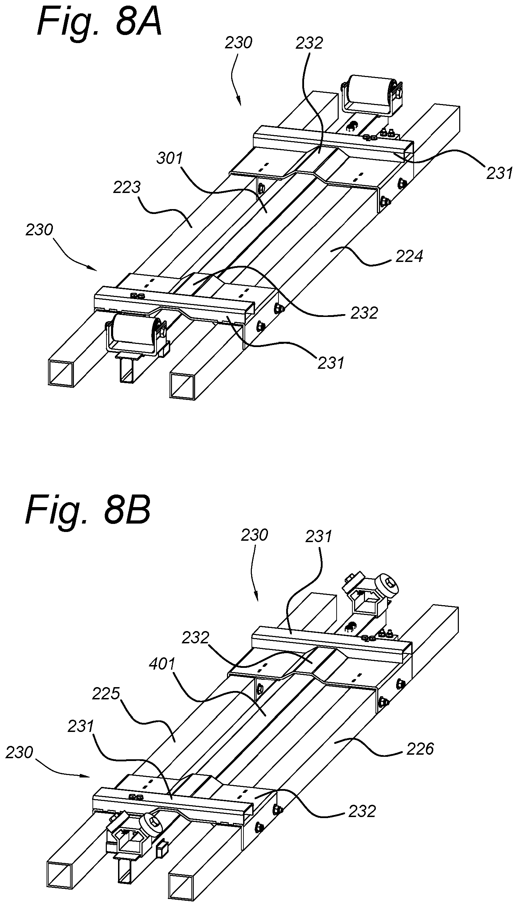

Figs. 8A and 8B show detailed upside down views of support beams 301 and 401, e.g. as shown in Figs. 2-4, wherein their adjacent crossbeams 223,234 and 225,226 are connected to reinforcement structures 230. Due to the manner in which each support beam is connected to its crossbeams, a load that is exerted on a support beam can cause the support beam to exert a horizontally directed force on its adjacent cross-beams. Each reinforcement structure 230 comprises a reinforcement beam 231 that is mounted to a folded plate 232, the beam 231 and 232 together spanning the distance between the two crossbeams to substantially prevent the crossbeams from bending due to such a horizontally directed force. The reinforcement structures 230 remain spaced apart from the support beams regardless of the force exerted on the support beams by the frame during normal use. The reinforcement structures 230 extend along a lower side of the cross-beams. Thus, the reinforcement structures 230 interconnect the crossbeams at the lower upper surfaces of the cross beams, and the crossbeams may be attached at their upper sides to a lower side of the support surface and/or at their distal ends to the sidewalls 11, 13. In summary, a moveable holder for a plurality plants is provided which comprises a frame with a support surface for supporting thereon the plurality of plants, wherein the frame is attached via load cells to support beams to which roller devices are attached for allowing rolling movement of the holder across a pair of rails or tubes, e.g. as may be present in a greenhouse. The holder is provided with one or more transmitters which are connected to corresponding load cells, and which can wirelessly transmit messages containing data on the force exerted on the support beams by the frame as measured by the load cells. In this manner, a change in weight of the plants that is indicative of evaporation of water by all of the plants held on the support surface can be obtained.

A method for retrofitting a prior art holder with load cells is provided as well, as is an assembly of a plurality of holder having similar dimensions, in particular having support surfaces at substantially same heights when the holder is supported on a pair of rails or tubes, wherein some of the holders are provided with load cells and others are not.

## Claims

1. Moveable holder (200) for the cultivation of a plurality of plants, comprising:
a frame (10), wherein said frame is provided with a support surface (30) having an area of at least 4 m² for supporting thereon the plurality of plants; said support surface having two oppositely facing edges; the frame (10) further comprising a plurality of crossbeams (20,223,224,225,226) arranged below the support surface and substantially bridging a distance between the two oppositely facing edges;
wherein the holder further comprises:
two or more support beams (301,401), each extending between two adjacent crossbeams (223,224; 225,226) and parallel to said crossbeams; wherein on each of the support beams roller devices (5a,5b; 6a,6b) are provided for allowing rolling movement of the holder across a pair of rails or tubes (101,102), **characterised in that** the holder further comprises
a number of load cells (304a, 304b; 404a,404b) for measuring a force exerted on the support beams by the frame;
wherein each of the support beams (301,401) is mounted to its two adjacent crossbeams via one or more of said load cells, and
one or more transmitters (242a, 242b) connected to the load cells and adapted for periodically wirelessly transmitting a message containing data on the force exerted on the support beams by the frame as measured by the load cells,
wherein the support surface is completely supported on the support beams via the load cells, so that change in weight carried by the frame can be detected by the load cells.

2. Moveable holder according to claim 1, wherein the frame comprises sidewalls (11,13) at the oppositely facing edges, and the crossbeams connect to both said side walls.

3. Moveable holder according to claim 1 or 2, wherein the support surface is a substantially closed surface.

4. Moveable holder according to claim 1 or 2, wherein the support surface is provided with plurality of through openings for allowing air and/or liquid to pass through.

5. Moveable holder according to any one of the preceding claims, wherein the support beams each have a length of at least 90% of the maximum length of its two adjacent crossbeams.

6. Moveable holder according to any one of the preceding claims, wherein the support beams each have a lower surface that is substantially flush with the lower surface of one or more crossbeams that are not adjacent to the support beams, preferably wherein the crossbeams that are adjacent to the support beams each have a lower surface that is arranged vertically above the lower surface of the adjacent support beam, when in use.

7. Moveable holder according to any one of the preceding claims, wherein the roller devices are each provided with one or more rollers adapted for rolling contact with a rail or tube of the pair of rails or tubes, wherein when the holder is in an orientation of use in which the support surface extends horizontally, no part of the holder projects further away from the support surface at the lower side of the holder than rollers

8. Moveable holder according to any one of the preceding claims, wherein the support surface and/or the holder, when seen in top view, has a substantially rectangular outline.

9. Moveable holder according to any one of the preceding claims, wherein the signal indicative of the force exerted on the support beams by the frame is a sum of signals provided by the load cells.

10. Assembly (500) for the cultivation of plants, comprising one or more holders (200) according to any one of the preceding claims, and two parallel tubes (101,102) or rails in contact with the rolling elements of said one or more holders.

11. Assembly according to claim 10, further comprising:
a receiver (542) adapted for receiving from a holder (200) of the one or more holders, a message containing current data on the force exerted on the support beams by the frame of said holder as measured by the load cells thereof;
a memory (541); and
a processor (543) connected to the memory and in communication with the receiver, configured for storing in the memory an array of at least six historical data elements derived from messages received earlier from the same holder, wherein the processor is further configured to:
- determine whether the current data differs by more than a predetermined degree from the historical data elements, and if not, updating the historical data elements based on the current data, and otherwise not updating the historical data elements; and
- outputting signals representative of the historical data elements to a display, preferably wherein the receiver, memory, processor and display are integrated in trend monitoring device.

12. Assembly according to claim 11, wherein the historical data elements are stored in the memory in a queue, and wherein updating the historical data elements based on the current data comprises discarding an oldest of the data elements from the queue and storing a new element that is based on the current data in the queue as a newest historical data element.

13. Assembly according to claim 11 or 12, wherein the historical data elements comprise differences over time between measurements indicative of the total force measured by the load cells, and wherein the processor is configured for determining a difference value between the current data and the data from a most recent previously received message which contained data based upon which the historical data elements were updated, and wherein the current data differs by more than a predetermined degree from the historical data elements if the difference value differs by more than a predetermined percentage from an average value of the historical data elements, preferably wherein said predetermined percentage is 8% or greater.

14. Method of providing a weight change measuring capability to a moveable holder (1) for the cultivation of a plurality of plants, wherein the moveable holder comprises a frame, wherein said frame comprises a support surface having an area of at least 4 m² for supporting thereon the plurality of plants, said support surface having two oppositely facing edges; the frame comprising a plurality of crossbeams arranged below the support surface and substantially bridging a distance between the two oppositely facing edges, wherein on a first and a second of the crossbeams roller devices are provided for allowing rolling movement of the holder across a pair of rails or tubes; the method comprising:
removing the first and second of the crossbeams from the frame;
mounting, on either side of the position where the first crossbeam was mounted, two further crossbeams (223,224) and attaching a first support beam (301), via one or more load cells (304a,304b), to the two further crossbeams;
mounting, on either side of adjacent to the position where the second crossbeam was mounted, two further crossbeams ( 225,226) and attaching a second support beam (401), via one or more load cells (404a,404b), to the two further crossbeams;
mounting, on the holder, a transmitter (242) adapted for wirelessly transmitting a message indicative of the force exerted on the support beams by the frame, and connecting the transmitter to the load cells;
wherein the first and second support beams are each provided with roller devices for allowing rolling movement of the holder across a pair of rails or tubes.

15. Method according to claim 14, wherein the first and second support beams are attached to their adjacent further crossbeams in such a manner that the vertical distance between the roller devices and the support surface when the first and second cross beams were mounted to the frame, is substantially equal to the distance between the roller devices and the support surface when the first and support beams are attached to their adjacent further crossbeams.

## Patentansprüche

1. Bewegliche Halterung (200) für die Kultivierung einer Vielzahl von Pflanzen, welche Folgendes umfasst:
einen Rahmen (10), wobei der besagte Rahmen mit einer Auflagefläche (30) versehen ist, die eine Fläche von mindestens 4 m² aufweist, um darauf die Vielzahl von Pflanzen zu tragen; wobei die besagte Auflagefläche zwei einander gegenüberliegende Kanten hat; wobei der Rahmen (10) ferner eine Vielzahl von Querträgern (20, 223, 224, 225, 226) umfasst, die unterhalb der Auflagefläche angeordnet sind und im Wesentlichen einen Abstand zwischen den beiden einander gegenüberliegenden Kanten überbrücken;
wobei die Halterung weiterhin umfasst:
zwei oder mehr Stützträger (301, 401), die sich jeweils zwischen zwei benachbarten Querträgern (223, 224, 225, 226) und parallel zu den besagten Querträgern erstrecken;
wobei an jedem der Stützträger Rollenvorrichtungen (5a, 5b; 6a, 6b) vorgesehen sind, um eine Rollbewegung der Halterung über ein Paar von Schienen oder Rohren (101, 102) zu ermöglichen, **dadurch gekennzeichnet, dass** die Halterung ferner umfasst:
eine Reihe von Kraftmesszellen (304a, 304b; 404a, 404b) zum Messen einer Kraft, die durch den Rahmen auf die Stützträger ausgeübt wird;
wobei jeder der Stützträger (301, 401) an seinen beiden benachbarten Querträgern über eine oder mehrere der besagten Kraftmesszellen befestigt ist, und
einen oder mehrere Sender (242a, 242b), die mit den Kraftmesszellen verbunden sind und so ausgelegt sind, dass sie periodisch drahtlos eine Nachricht übertragen, die Daten über die von dem Rahmen auf die Stützträger ausgeübte Kraft enthält, so wie sie von den Kraftmesszellen gemessen wird,
wobei die Auflagefläche über die Kraftmesszellen vollständig auf den Stützträgern aufliegt, so dass Gewichtsveränderungen des Rahmens durch die Kraftmesszellen erfasst werden können.

2. Bewegliche Halterung nach Anspruch 1, wobei der Rahmen an den einander gegenüberliegenden Kanten Seitenwände (11, 13) aufweist und die Querträger mit beiden besagten Seitenwänden verbunden sind.

3. Bewegliche Halterung nach Anspruch 1 oder 2, wobei die Auflagefläche eine im Wesentlichen geschlossene Fläche ist.

4. Bewegliche Halterung nach Anspruch 1 oder 2, wobei die Auflagefläche mit einer Vielzahl von Durchgangsöffnungen versehen ist, durch die Luft und/oder Flüssigkeit strömen kann.

5. Bewegliche Halterung nach einem der vorhergehenden Ansprüche, wobei die Stützträger jeweils eine Länge von mindestens 90% der maximalen Länge ihrer beiden benachbarten Querträger aufweisen.

6. Bewegliche Halterung nach einem der vorhergehenden Ansprüche, wobei die Stützträger jeweils eine untere Fläche aufweisen, die im Wesentlichen mit der unteren Fläche eines oder mehrerer Querträger, die nicht an die Stützträger angrenzen, bündig ist, wobei vorzugsweise die Querträger, die an die Stützträger angrenzen, jeweils eine untere Fläche aufweisen, die im Gebrauch vertikal über der unteren Fläche des angrenzenden Stützträgers angeordnet ist.

7. Bewegliche Halterung nach einem der vorhergehenden Ansprüche, wobei die Rollenvorrichtungen jeweils mit einer oder mehreren Rollen versehen sind, die für einen Rollkontakt mit einer Schiene oder einem Rohr des Schienen- oder Rohrpaares geeignet sind, wobei, wenn sich die Halterung in einer Gebrauchsausrichtung befindet, in der sich die Auflagefläche horizontal erstreckt, kein Teil der Halterung an der Unterseite der Halterung weiter von der Auflagefläche hinwegragt als die Rollen.

8. Bewegliche Halterung nach einem der vorhergehenden Ansprüche, wobei die Auflagefläche und/oder die Halterung in der Draufsicht einen im Wesentlichen rechteckigen Umriss aufweist.

9. Bewegliche Halterung nach einem der vorhergehenden Ansprüche, wobei das Signal, das die durch den Rahmen auf die Stützträger ausgeübte Kraft anzeigt, eine Summe der von den Kraftmesszellen gelieferten Signale ist.

10. Bauteilgruppe (500) für den Anbau von Pflanzen, mit einem oder mehreren Halterungen (200) nach einem der vorhergehenden Ansprüche und zwei parallelen Rohren (101, 102) oder Schienen, die mit den Rollelementen der besagten einen oder der mehreren Halterungen in Kontakt stehen.

11. Bauteilgruppe nach Anspruch 10, welche ferner umfasst:
einen Empfänger (542), der geeignet ist, von einer Halterung (200) der einen oder der mehreren Halterungen eine Nachricht zu empfangen, die aktuelle Daten über die Kraft enthält, die durch den Rahmen der besagten Halterung auf die Stützträger ausgeübt wird, wie sie von dessen Kraftmesszellen gemessen wird;
einen Speicher (541); und
einen Prozessor (543), der mit dem Speicher verbunden ist und in Kommunikation mit dem Empfänger steht, und der so konfiguriert ist, dass er in dem Speicher eine Anordnung von mindestens sechs historischen Datenelementen speichert, die von früher empfangenen Nachrichten derselben Halterung abgeleitet sind, wobei der Prozessor ferner konfiguriert ist, um zu:
- Bestimmen, ob sich die aktuellen Daten um mehr als ein vorbestimmtes Maß von den historischen Datenelementen unterscheiden, und wenn nicht, Aktualisieren der historischen Datenelemente auf der Grundlage der aktuellen Daten, und andernfalls Nicht-Aktualisieren der historischen Datenelemente; und
- Ausgeben von Signalen, die für die historischen Datenelemente repräsentativ sind, an eine Anzeige, wobei vorzugsweise der Empfänger, der Speicher, der Prozessor und die Anzeige in das Trendüberwachungsvorrichtung integriert sind.

12. Bauteilgruppe nach Anspruch 11, wobei die historischen Datenelemente im Speicher in einer Schlange gespeichert sind und wobei das Aktualisieren der historischen Datenelemente auf der Grundlage der aktuellen Daten das Verwerfen eines ältesten der Datenelemente aus der Schlange und das Speichern einen neuen Elementes, das auf den aktuellen Daten basiert, in der Schlange als neuestes historisches Datenelement umfasst.

13. Bauteilgruppe nach Anspruch 11 oder 12, wobei die historischen Datenelemente zeitliche Unterschiede zwischen Messungen umfassen, welche die von den Kraftmesszellen gemessene Gesamtkraft anzeigen, und wobei der Prozessor so konfiguriert ist, dass er einen Differenzwert zwischen den aktuellen Daten und den Daten aus einer letzten zuvor empfangenen Nachricht bestimmt, die Daten enthielt, auf deren Grundlage die historischen Datenelemente aktualisiert wurden, und wobei sich die aktuellen Daten um mehr als einen vorbestimmten Grad von den historischen Datenelementen unterscheiden, wenn sich der Differenzwert um mehr als einen vorbestimmten Prozentsatz von einem Durchschnittswert der historischen Datenelemente unterscheidet, wobei der vorbestimmte Prozentsatz vorzugsweise 8 % oder mehr beträgt.

14. Verfahren zum Ausstatten einer beweglichen Halterung (1) für die Kultivierung einer Vielzahl von Pflanzen mit einer Gewichtsänderungsmessfähigkeit, wobei die bewegliche Halterung einen Rahmen umfasst, wobei der Rahmen eine Stützfläche mit einer Fläche von mindestens 4 m² umfasst, um darauf die Vielzahl von Pflanzen zu tragen, wobei die Stützfläche zwei einander gegenüberliegende Kanten aufweist; wobei der Rahmen eine Vielzahl von Querträgern umfasst, die unter der Auflagefläche angeordnet sind und im Wesentlichen einen Abstand zwischen den beiden einander gegenüberliegenden Kanten überbrücken, wobei an einem ersten und einem zweiten der Querträger Rollenvorrichtungen vorgesehen sind, die eine Rollbewegung der Halterung über ein Paar Schienen oder Rohre ermöglichen; wobei das Verfahren Folgendes umfasst:
Entfernen des ersten und zweiten Querträgers vom Rahmen;
Anbringen von zwei weiteren Querträgern (223, 224) auf beiden Seiten der Stelle, an welcher der erste Querträger angebracht war, und Befestigen eines ersten Stützträgers (301) über eine oder mehrere Kraftmesszellen (304a, 304b) an den beiden weiteren Querträgern;
Anbringen von zwei weiteren Querträgern (225, 226) auf beiden Seiten neben der Stelle, an welcher der zweite Querträger angebracht wurde, und Befestigen eines zweiten Stützträgers (401) über eine oder mehrere Kraftmesszellen (404a, 404b) an den beiden weiteren Querträgern;
Anbringen eines Senders (242) an der Halterung, der geeignet ist, drahtlos eine Nachricht zu übertragen, welche die durch den Rahmen auf die Stützträger ausgeübte Kraft angibt, und Verbinden des Senders mit den Kraftmesszellen;
wobei der erste und der zweite Stützträger jeweils mit Rollenvorrichtungen versehen sind, die eine rollende Bewegung der Halterung über ein Paar von Schienen oder Rohren ermöglichen.

15. Verfahren nach Anspruch 14, bei dem der erste und der zweite Stützträger an ihren benachbarten weiteren Querträgern so befestigt werden, dass der vertikale Abstand zwischen den Rollenvorrichtungen und der Auflagefläche, wenn der erste und der zweite Querträger am Rahmen befestigt sind, im Wesentlichen gleich dem Abstand zwischen den Rollenvorrichtungen und der Auflagefläche ist, wenn der erste und Stützträger an ihren benachbarten weiteren Querträgern befestigt sind.

## Revendications

1. Support mobile (200) pour la culture d'une pluralité de plantes, comprenant :
un bâti (10), dans lequel ledit bâti est prévu avec une surface de support (30) ayant une superficie d'au moins 4 m² pour supporter sur cette dernière, la pluralité de plantes ; ladite surface de support ayant deux bords orientés à l'opposé ; le bâti (10) comprenant en outre une pluralité de traverses (20, 223, 224, 225, 226) agencées au-dessous de la surface de support et comblant sensiblement une distance entre les deux bords orientés de manière opposée ;
dans lequel le support comprend en outre :
deux poutres de support ou plus (301, 401) s'étendant chacune entre les deux traverses (223, 224 ; 225, 226) adjacentes et parallèles auxdites traverses ; dans lequel sur chacune des poutres de support, on prévoit des dispositifs de rouleau (5a, 5b ; 6a, 6b) pour permettre le mouvement de roulement du support sur une paire de rails ou de tubes (101, 102), **caractérisé en ce que** le support comprend en outre :
un certain nombre de cellules de charge (304a, 304b ; 404a, 404b) pour mesurer une force exercée sur les poutres de support par le bâti ;
dans lequel chacune des poutres de support (301, 401) est montée sur ses deux traverses adjacentes via une ou plusieurs desdites cellules de charge,
un ou plusieurs émetteurs (242a, 242b) raccordés aux cellules de charge et adaptés pour transmettre périodiquement, sans fil, un message contenant des données concernant la force exercée sur les poutres de support par le bâti, telle que mesurée par les cellules de charge,
dans lequel la surface de support est complètement supportée sur les poutres de support via les cellules de charge, de sorte que le changement de poids porté par le bâti peut être détecté par les cellules de charge.

2. Support mobile selon la revendication 1, dans lequel le bâti comprend des parois latérales (11, 13) au niveau des bords orientés à l'opposé, et les traverses se raccordent aux deux desdites parois latérales.

3. Support mobile selon la revendication 1 ou 2, dans lequel la surface de support est une surface sensiblement fermée.

4. Support mobile selon la revendication 1 ou 2, dans lequel la surface de support est prévue avec une pluralité d'ouvertures débouchantes pour permettre le passage de l'air et/ou du liquide.

5. Support mobile selon l'une quelconque des revendications précédentes, dans lequel les poutres de support ont chacune une longueur représentant au moins 90% de la longueur maximum de ses deux traverses adjacentes.

6. Support mobile selon l'une quelconque des revendications précédentes, dans lequel les poutres de support ont chacune une surface inférieure qui est sensiblement à fleur avec la surface inférieure des une ou plusieurs traverses qui ne sont pas adjacentes aux poutres de support, de préférence dans lequel les traverses qui sont adjacentes aux poutres de support ont chacune une surface inférieure qui est agencée verticalement au-dessus de la surface inférieure de la poutre de support adjacente, lors de l'utilisation.

7. Support mobile selon l'une quelconque des revendications précédentes, dans lequel les dispositifs de rouleau sont chacun prévus avec un ou plusieurs rouleaux adaptés pour le contact de roulement avec un rail ou tube de la paire de rails ou de tubes, dans lequel lorsque le support est dans une orientation d'utilisation dans laquelle la surface de support s'étend horizontalement, aucune partie du support ne fait davantage saillie à l'opposé de la surface de support au niveau du côté inférieur du support que les rouleaux.

8. Support mobile selon l'une quelconque des revendications précédentes, dans lequel la surface de support et/ou le support, lors de l'observation sur une vue de dessus, a un contour sensiblement rectangulaire.

9. Support mobile selon l'une quelconque des revendications précédentes, dans lequel le signal indicatif de la force exercée sur les poutres de support par le bâti est une somme de signaux fournis par les cellules de charge.

10. Ensemble (500) pour la culture de plantes, comprenant un ou plusieurs supports (200) selon l'une quelconque des revendications précédentes, et deux tubes (101, 102) ou rails parallèles en contact avec les éléments de roulement desdits un ou plusieurs supports.

11. Ensemble selon la revendication 10, comprenant en outre :
un récepteur (542) adapté pour recevoir, depuis un support (200) des un ou plusieurs supports, un message contenant des données actuelles concernant la force exercée sur les poutres de support par le bâti dudit support, telle que mesurée par ses cellules de charge ;
une mémoire (541) ; et
un processeur (543) raccordé à la mémoire et en communication avec le récepteur, configuré pour stocker, dans la mémoire, un ensemble d'au moins six éléments de données historiques dérivés des messages reçus précédemment du même support, dans lequel le processeur est en outre configuré pour :
- déterminer si les données actuelles diffèrent de plus d'un degré prédéterminé des éléments de données historiques et si non, mettre à jour les éléments de données historiques sur la base des données actuelles et sinon ne pas mettre à jour les éléments de données historiques ; et
- transmettre des signaux représentatifs des éléments de données historiques à un affichage, de préférence dans lequel le récepteur, la mémoire, le processeur et l'affichage sont intégrés dans un dispositif de surveillance de tendance.

12. Ensemble selon la revendication 11, dans lequel les éléments de données historiques sont stockés dans la mémoire dans une file d'attente, et dans lequel la mise à jour des éléments de données historiques basés sur les données actuelles comprend la suppression du plus vieux des éléments de données de la file d'attente, et le stockage d'un nouvel élément qui est basé sur les données actuelles dans la file d'attente en tant qu'élément de données historique le plus récent.

13. Ensemble selon la revendication 11 ou 12, dans lequel les éléments de données historiques comprennent des différences avec le temps entre les mesures indicatives de la force totale mesurée par les cellules de charge, et dans lequel le processeur est configuré pour déterminer une valeur de différence entre les données actuelles et les données provenant du message le plus récent précédemment reçu qui contient des données sur la base desquelles les éléments de données historiques ont été mis à jour, et dans lequel les données actuelles diffèrent de plus d'un degré prédéterminé des éléments de données historiques si la valeur de différence diffère de plus d'un pourcentage prédéterminé d'une valeur moyenne des éléments de données historiques, de préférence dans lequel ledit pourcentage prédéterminé est de 8% ou plus.

14. Procédé pour fournir une capacité de mesure de changement de poids à un support mobile (1) pour la culture d'une pluralité de plantes, dans lequel le support mobile comprend un bâti, dans lequel ledit bâti comprend une surface de support ayant une superficie d'au moins 4 m² pour supporter, sur cette dernière, la pluralité de plantes, ladite surface de support ayant deux bords orientés à l'opposé ; le bâti comprenant une pluralité de traverses agencées au-dessous de la surface de support et comblant sensiblement une distance entre les deux bords orientés à l'opposé, dans lequel sur une première et une deuxième des traverses, on prévoir des dispositifs de rouleau pour permettre le mouvement de roulement du support sur une paire de rails ou de tubes ; le procédé comprenant les faits de :
retirer les première et deuxième traverses du bâti ;
monter, sur chaque côté de la position dans laquelle la première traverse a été montée, deux traverses (223, 224) supplémentaires et fixer une première poutre de support (301), via une ou plusieurs cellules de charge (304a, 304b), aux deux traverses supplémentaires ;
monter, sur chaque côté adjacent à la position dans laquelle la deuxième traverse a été montée, deux traverses (225, 226) supplémentaires et fixer une deuxième poutre de support (401), via une ou plusieurs cellules de charge (404a, 404b), aux deux traverses supplémentaires ;
monter, sur le support, un émetteur (242) adapté pour transmettre, sans fil, un message indicatif de la force exercée sur les poutres de support par le bâti, et raccorder l'émetteur aux cellules de charge ;
dans lequel les première et deuxième poutres de support sont chacune prévues avec des dispositifs de rouleau pour permettre le mouvement de roulement du support sur une paire de rails ou de tubes.

15. Procédé selon la revendication 14, dans lequel les première et deuxième poutres de support sont fixées à leurs traverses supplémentaires adjacentes de sorte que la distance verticale entre les dispositifs de rouleau et la surface de support, lorsque les première et deuxième traverses ont été montées sur le bâti, est sensiblement égale à la distance entre les dispositifs de rouleau et la surface de support, lorsque la première et les poutres de support sont fixées à leurs traverses supplémentaires adjacentes.
